(19) **Europäisches Patentamt / European Patent Office / Office européen des brevets**

(11) **EP 2 984 792 B1**

(12) **FASCICULE DE BREVET EUROPEEN**

(45) Date de publication et mention
de la délivrance du brevet:
**24.06.2020 Bulletin 2020/26**

(21) Numéro de dépôt: **14720652.8**

(22) Date de dépôt: **03.04.2014**

(51) Int Cl.:
*H04L 12/40* (2006.01)  *H04L 12/26* (2006.01)
*H04L 12/24* (2006.01)  *H04L 12/801* (2013.01)

(86) Numéro de dépôt international:
**PCT/FR2014/050801**

(87) Numéro de publication internationale:
**WO 2014/167216 (16.10.2014 Gazette 2014/42)**

(54) **PROCÉDÉ ET SYSTÈME DE LISSAGE DES PICS DE CHARGE D'UN RÉSEAU DE DONNÉES EN TEMPS RÉEL.**

VERFAHREN UND SYSTEM ZUR GLÄTTUNG LASTSPITZEN EINES DATENNETZES IN ECHTZEIT

METHOD AND SYSTEM FOR SMOOTHING LOAD PEAKS OF A DATA NETWORK IN REAL TIME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2013 FR 1353272**

(43) Date de publication de la demande:
**17.02.2016 Bulletin 2016/07**

(73) Titulaire: **Renault S.A.S.**
**92100 Boulogne-Billancourt (FR)**

(72) Inventeurs:
• **VILLANUEVA, Josetxo**
**F-75015 Paris (FR)**
• **CAMPOY-MARTINEZ, Sergio**
**F-92130 Issy Les Moulineaux (FR)**

(56) Documents cités:
**EP-A1- 1 152 633        EP-A1- 1 152 633**
**US-A1- 2009 003 215**

**EP 2 984 792 B1**

**Description**

L'invention a pour domaine technique les réseaux de données d'un véhicule automobile, et plus particulièrement de tels réseaux à la norme CAN.

Actuellement, la charge réseau moyenne d'un BUS est estimée en réalisant le rapport entre le temps d'activité effective du BUS sur une période d'observation. Ainsi, une charge de 50% du BUS implique que l'activité sur le BUS représente la moitié du temps d'observation, si on prend une fenêtre d'observation suffisamment grande.

Par BUS, on entend un réseau de données et/ou informatique, de type liaison partagée, pouvant être partagé entre différents dispositifs, et permettant d'échanger des données. Un BUS est notamment un réseau de données de type temps réel.

Par réseau CAN, on entend un contrôleur de réseau de zone (« Controller Area Network » en langue anglaise, acronyme « CAN ») qui permet le raccordement à un même câble, ou BUS, d'un grand nombre de calculateurs qui communiquent à tour de rôle, ou simultanément. La communication des calculateurs est assurée par l'émission de trames correspondant à un ensemble de données codifiées selon des normes prédéfinies. Chaque trame est émise périodiquement, avec une période d'émission qui lui est propre et qui est déterminée lors de la conception du calculateur et/ou du BUS. Chaque calculateur peut émettre une ou plusieurs trames.

Etant donné que les horloges des différents calculateurs connectés à un BUS CAN ne sont pas synchronisées, on pourrait espérer que l'émission des trames des différents calculateurs soit distribuée uniformément dans le temps. Ainsi, les temps d'accès au BUS devraient être éloignés des temps d'accès, dans une situation dite du pire cas.

Cependant, l'observation d'enregistrement de l'activité de BUS lors d'essais sur route enseigne que la charge réseau d'un BUS CAN n'est pas distribuée de façon homogène dans le temps. Suite à la dérive naturelle des horloges des calculateurs, on observe des phases transitoires assez longues (plusieurs minutes) pendant lesquelles les horloges de plusieurs calculateurs peuvent se synchroniser et produire des phénomènes de pics de charge. Ces pics de charge sont particulièrement préjudiciables pour ce type de réseaux qui ont pour but de fonctionner en temps réel, c'est-à-dire sans délai notable entre l'émission et la réception d'informations.

Lorsque le comportement temps-réel du BUS CAN est affecté par des pics de charge, les temps d'accès au BUS s'approchent des conditions « au pire cas ». En effet, tant que le niveau de charge de BUS CAN reste à des niveaux raisonnables (<50%), on peut considérer que la somme des temps additionnels d'arbitrage induits par les pics de charge ne dépassera les délais admissibles pour la communication en temps réel entre les calculateurs connectés au BUS.

Si l'on augmente la charge de BUS CAN bien au-delà des limites raisonnables (>>50%), les pics de charge vont se généraliser. Dans un tel cas, les temps d'accès au BUS vont s'approcher de la situation « au pire cas ». Si cela arrive, on risque de ne plus respecter les exigences relatives aux délais admissibles pour la communication en temps réel entre les calculateurs connectés au BUS.

De l'état de la technique, on connaît le document EP1892631 qui propose une méthode pour calculer la charge moyenne d'un BUS, pour la comparer à un seuil, puis pour inhiber l'émission de certains messages de faible priorité afin de réduire la charge moyenne du BUS.

Le document KR20090010454 divulgue la stabilisation de la charge moyenne d'un BUS CAN, mais il ne permet pas de résoudre les problèmes liés aux pics de charge.

Dans le document KR20090010454, un calculateur central vérifie l'état de charge du BUS CAN. Quand un seuil de charge est dépassé, un protocole permettant d'inhiber les messages des autres calculateurs est activé.

Le document US2009/003215 décrit la détection des pics de charge apparaissant dans le réseau de données. On compte le nombre de pics de charge sur une fenêtre d'intégration présentant une première durée, la fenêtre d'intégration se déplaçant avec le temps et on détermine que le réseau de données est en situation de phase transitoire de pics de charge si le nombre de pics de charge détectés est supérieur à un premier seuil.

Il apparaît qu'il demeure un problème relatif à la mise à disposition des informations de qualité de service du BUS, et à la correction des pics de charge lorsque la qualité de service du BUS est insatisfaisante.

Un but de l'invention est de réduire les phases transitoires de pics de charge au minimum pour améliorer le temps réel du réseau de données.

Un objet de l'invention est un procédé de lissage des pics de charge d'un réseau de données en temps réel, comprenant les étapes suivantes :

on détecte les pics de charge apparaissant dans le réseau de données,
on compte le nombre de pics de charge sur une fenêtre d'intégration présentant une première durée, la fenêtre d'intégration se déplaçant avec le temps,
on détermine que le réseau de données est en situation de phase transitoire de pics de charge si le nombre de pics de charge détectés est supérieur à un premier seuil, puis
on déclenche des mécanismes de protection du réseau de données.

2

On peut réaliser une détection de pic isolé de charge en mettant en œuvre les étapes suivantes :

on compte le nombre de trames émises dans une fenêtre d'intégration en temps de deuxième durée,
on détermine la valeur moyenne des trames en multipliant le nombre de trames émises par le taux de charge du réseau de données,
on définit un premier seuil entre le nombre moyen de trames et le nombre maximal de trames du réseau de données, et
on détermine qu'un pic de charge a lieu si le nombre de trames est supérieur au premier seuil.

La première durée peut être supérieure à la deuxième durée.

Les mécanismes de protection du réseau de données peuvent comprendre un autolissage des pics de charge au cours duquel on applique un décalage temporel distinct pour chacun des calculateurs connectés au réseau de données impliqués dans la phase transitoire de pics de charge.

On peut effectuer un autolissage des pics de charge d'un réseau de données en temps réel comprenant au moins deux calculateurs en mettant en œuvre les étapes suivantes :

pour chacun des calculateurs participant à une phase transitoire de pics de charge, on détermine un décalage temporel négatif,
on applique ce décalage temporel négatif lors de l'envoi de toutes les trames du calculateur, le décalage temporel négatif étant ajouté à un éventuel décalage temporel préexistant.

On peut déterminer la valeur du décalage temporel négatif de chaque calculateur par tirage au sort aléatoire, la valeur étant comprise entre zéro et la valeur de la plus petite période d'émission de trame du calculateur.

Un autre objet de l'invention est un système de lissage des pics de charge d'un réseau de données en temps réel. Le système comprend des moyens pour détecter les pics de charge apparaissant dans le réseau de données, des moyens de comptage du nombre de pics de charge détectés sur une fenêtre d'intégration présentant une première durée, la fenêtre d'intégration se déplaçant avec le temps, des moyens de détermination d'une situation de phase transitoire de pics de charge si le nombre de pics de charge détectés est supérieur à un premier seuil, et, des moyens de protection du réseau de données.

Les moyens de protection du réseau de données peuvent comprendre des moyens d'autolissage des pics de charge par application d'un décalage temporel distinct pour chacun des calculateurs connectés au réseau de données impliqués dans la phase transitoire de pics de charge.

D'autres buts, caractéristiques et avantages apparaîtront à la lecture de la description suivante donnée uniquement en tant qu'exemple non limitatif et faite en référence aux dessins annexés sur lesquels :

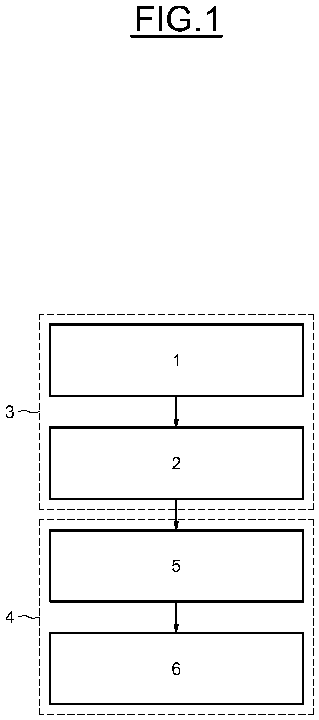

- la figure 1 illustre les principales étapes d'un procédé de lissage des pics de charge d'un réseau de données en temps réel,
- la figure 2 illustre la détection de pics de charge, et
- la figure 3 illustre la détection de phases de pics de charge.

La dérive des horloges de différents calculateurs peut provoquer un pic de charge sur le BUS CAN au cours duquel tous les calculateurs essayent d'émettre des trames en même temps. Le pire cas arrive quand toutes les trames existantes dans le BUS sont envoyées collées les unes après les autres.

Afin de caractériser les phases de pics de charge, deux valeurs vont être calculées, une valeur de nombre de trames, et une valeur de nombre de pics de charge

Le nombre de trames pouvant circuler dans le BUS, noté NbMaxTrames et la somme des durées de transmission de toutes les trames pouvant circuler dans le BUS noté TMax. On remarque que Tmax est également équivalent au temps de transmission de la trame la moins prioritaire dans le BUS, dans une situation de pire cas.

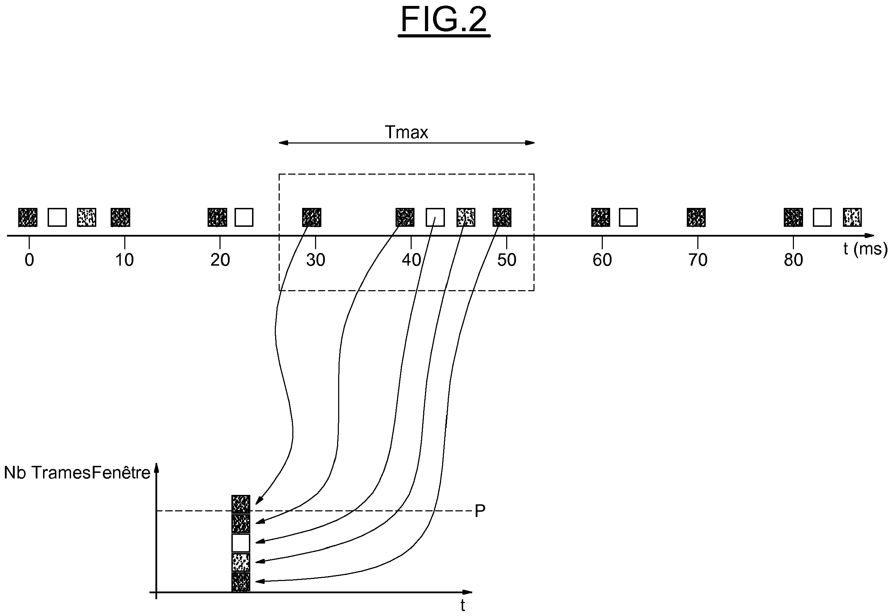

Pour déterminer l'indicateur de phase transitoire de pics de charge, on réalise une première étape 1 de détection de pic isolé de charge. L'étape 1 est également illustrée par la figure 2 sur laquelle on peut voir l'émission de trames au cours du temps en partie supérieure de la figure et la valeur intégrée comparée à un seuil de détection en partie inférieure de la figure.

Au cours de cette première étape, on compte le nombre de trames (noté NbTramesFenetre) émises dans une fenêtre d'intégration présentant une première durée TMax. Dans le pire des cas, la valeur du nombre de trames comptées est égal au nombre de trames pouvant circuler dans le BUS, NbMaxTrames.

La valeur moyenne NbMoyTrames des trames dans la fenêtre Tmax peut être estimée par la formule suivante :

$$NbMoyTrames = \sum(1/P_i)*Tmax \qquad (Eq.\ 1)$$

Avec :

i variant de 1 à NbTrames
$P_i$= Période de la trame i
$\sum(1/P_i)$=Trames/s
Tmax= durée de la fenêtre en secondes
NbTrames=Nombre de trames différentes pouvant être émises

En d'autres termes, NbMoyTrames est la somme de l'inverse des périodes de chaque trame multipliée par la durée de la fenêtre d'observation

On définit ensuite un seuil P, homogène à un nombre de trames, dont la valeur est comprise entre la valeur moyenne (NbMoyTrames) et la valeur maximale (NbMaxTrames).

On détermine ensuite si le nombre de trames NbTramesFenetre est supérieur au seuil P. Si tel est le cas, on considère qu'un pic de charge a lieu dans le BUS. En fonction du paramétrage du seuil P, la détection des pics isolés de charge sera plus ou moins sensible.

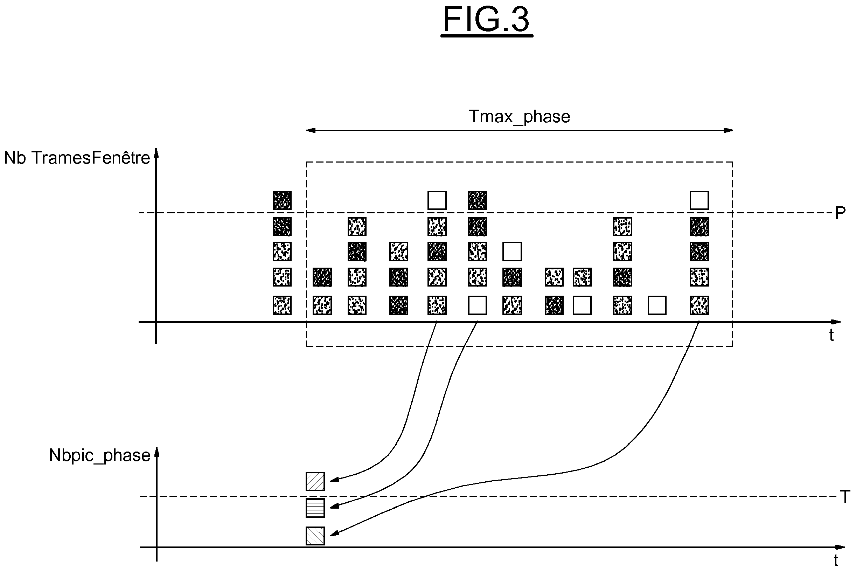

On cherche ensuite à distinguer un pic de charge isolé d'une phase transitoire de pics de charge répétitifs. Pour cela, on réalise une deuxième étape 2 comprenant les sous-étapes suivantes. La deuxième étape est illustrée par la figure 3 sur laquelle on peut voir les pics de charge détectés au cours du temps en partie supérieure de la figure et la valeur intégrée comparée à un seuil de détection en partie inférieure de la figure.

On compte le nombre (Nbpic_phase) de pics de charge sur une fenêtre d'intégration en temps (Tmax_phase). La taille de cette fenêtre d'intégration en temps présentant une deuxième durée (Tmax_phase) est paramétrable, et généralement plus grande que la fenêtre d'intégration en temps de première durée (Tmax) permettant de compter le nombre de trames (Nbtrames), et permet de déterminer la réactivité de détection des phases transitoires de pics de charge.

On fixe un seuil T, dont la valeur dépend de la conception du BUS CAN.

On détermine ensuite si le nombre de pics de charge détectés (Nbpic_phase) dépasse le seuil T. Dans un tel cas, on déduira qu'on est rentré en situation de phase transitoire de pics de charge. Les étapes 1 et 2 permettent ainsi de réaliser une détermination 3 de phase transitoire de Pics de Charge.

Des mécanismes de défense peuvent alors être appliqués pour sortir au plus vite de cette phase. Pour cela, on déclenche des mécanismes de protection du réseau de données au cours d'une étape 4. Parmi ces mécanismes, on applique notamment un autolissage des pics de charge

Pour cela, on applique les étapes 5 et 6 suivantes:
Pour chacun des calculateurs participant à une phase transitoire de pics de charge, on détermine un décalage temporel négatif unique au cours de l'étape 5. Au cours d'une étape 6, on applique ce décalage temporel négatif lors de l'envoi de toutes les trames du calculateur, pour la durée du pic de charge. Le décalage temporel négatif est ajouté à un éventuel décalage temporel préexistant.

On détermine la valeur du décalage temporel négatif de chaque calculateur par tirage au sort aléatoire, la valeur étant comprise entre 0 et la valeur de la plus petite période d'émission de trame du calculateur.

Les étapes de détermination des occurrences de pics de charge, de détermination de phases de pics de charge et d'application d'un décalage temporel négatif aléatoire sont répétées en boucle avec une périodicité paramétrable.

**Revendications**

1. Procédé de lissage des pics de charge d'un réseau de données en temps réel, comprenant les étapes suivantes :

on détecte les pics de charge apparaissant dans le réseau de données,
on compte le nombre de pics de charge sur une fenêtre d'intégration présentant une première durée, la fenêtre d'intégration se déplaçant avec le temps,
on détermine que le réseau de données est en situation de phase transitoire de pics de charge si le nombre de pics de charge détectés est supérieur à un premier seuil, puis
**caractérisé par le fait qu'**il comprend les étapes suivantes :
on déclenche des mécanismes de protection du réseau de données comprenant un autolissage des pics de charge au cours duquel on applique un décalage temporel distinct pour chacun des calculateurs connectés au réseau de données impliqués dans la phase transitoire de pics de charge.

**2.** Procédé selon la revendication 1, dans lequel on réalise une détection de pic isolé de charge en mettant en œuvre les étapes suivantes :

on compte le nombre de trames émises dans une fenêtre d'intégration en temps de deuxième durée,
on détermine la valeur moyenne des trames en multipliant le nombre de trames émises par le taux de charge du réseau de données,
on définit un deuxième seuil dont la valeur est comprise entre le nombre moyen de trames et le nombre maximal de trames du réseau de données, et
on détermine qu'un pic de charge a lieu si le nombre de trames est supérieur au deuxième seuil.

**3.** Procédé selon l'une quelconque des revendications précédentes, dans lequel la première durée est supérieure à la deuxième durée.

**4.** Procédé selon l'une des revendications 1 à 3, dans lequel on effectue un autolissage des pics de charge du réseau de données en temps réel comprenant au moins deux calculateurs en mettant en œuvre les étapes suivantes :

pour chacun des calculateurs participant à une phase transitoire de pics de charge, on détermine un décalage temporel négatif,
on applique ce décalage temporel négatif lors de l'envoi de toutes les trames du calculateur, le décalage temporel négatif étant ajouté à un éventuel décalage temporel préexistant.

**5.** Procédé selon la revendication 4, dans lequel on détermine la valeur du décalage temporel négatif de chaque calculateur par tirage au sort aléatoire, la valeur étant comprise entre zéro et la valeur de la plus petite période d'émission de trame du calculateur.

**6.** Système de lissage des pics de charge d'un réseau de données en temps réel, comprenant :

des moyens pour détecter les pics de charge apparaissant dans le réseau de données,
des moyens de comptage du nombre de pics de charge détectés sur une fenêtre d'intégration présentant une première durée, la fenêtre d'intégration se déplaçant avec le temps,
des moyens de détermination d'une situation de phase transitoire de pics de charge si le nombre de pics de charge détectés est supérieur à un premier seuil, et
**caractérisé par le fait qu'**il comprend :
des moyens de protection du réseau de données comprenant des moyens d'autolissage des pics de charge par application d'un décalage temporel distinct pour chacun des calculateurs connectés au réseau de données impliqués dans la phase transitoire de pics de charge.

**Patentansprüche**

**1.** Verfahren zum Glätten der Lastspitzen eines Datennetzwerks in Echtzeit, das die folgenden Schritte enthält:

Erfassen der im Datennetzwerk auftretenden Lastspitzen, Zählen der Anzahl von Lastspitzen in einem Integrationsfenster, das eine erste Dauer aufweist, wobei das Integrationsfenster sich mit der Zeit bewegt,
Bestimmen, dass das Datennetzwerk in einer Übergangsphasensituation von Lastspitzen ist, wenn die Anzahl von erfassten Lastspitzen höher als eine erste Schwelle ist, dann
**dadurch gekennzeichnet, dass** es die folgenden Schritte enthält:
Auslösen von Schutzmechanismen des Datennetzwerks, die ein Selbstglätten der Lastspitzen enthalten, während dessen eine unterschiedliche Zeitverschiebung für jeden der mit dem Datennetzwerk verbundenen Rechner angewendet wird, die an der Lastspitzen-Übergangsphase beteiligt sind.

**2.** Verfahren nach Anspruch 1, wobei eine Erfassung einer isolierten Lastspitze durchgeführt wird, indem die folgenden Schritte ausgeführt werden:

Zählen der Anzahl von in einem Zeitintegrationsfenster zweiter Dauer gesendeten Rahmen,
Bestimmen des Mittelwerts der Rahmen, indem die Anzahl von gesendeten Rahmen mit dem Lastverhältnis des Datennetzwerks multipliziert wird,
Definieren einer zweiten Schwelle, deren Wert zwischen der mittleren Anzahl von Rahmen und der maximalen Anzahl von Rahmen des Datennetzwerks liegt, und
Bestimmen, dass eine Lastspitze vorliegt, wenn die Anzahl von Rahmen höher ist als die zweite Schwelle.

**3.** Verfahren nach einem der vorhergehenden Ansprüche, wobei die erste Dauer länger ist als die zweite Dauer.

**4.** Verfahren nach einem der Ansprüche 1 bis 3, wobei ein Selbstglätten der Lastspitzen des Datennetzwerks in Echtzeit durchgeführt wird, das mindestens zwei Rechner enthält, indem die folgenden Schritte durchgeführt werden:

für jeden der an einer Übergangsphase von Lastspitzen teilnehmenden Rechner wird eine negative Zeitverschiebung bestimmt,
diese negative Zeitverschiebung wird beim Senden aller Rahmen des Rechners angewendet, wobei die negative Zeitverschiebung zu einer vorab existierenden möglichen Zeitverschiebung hinzugefügt wird.

**5.** Verfahren nach Anspruch 4, wobei der Wert der negativen Zeitverschiebung jedes Rechners durch Zufallsauslosung bestimmt wird, wobei der Wert zwischen Null und dem Wert der kleinsten Rahmensendeperiode des Rechners liegt.

**6.** System zum Glätten der Lastspitzen eines Datennetzwerks in Echtzeit, das enthält:

Einrichtungen zur Erfassung der im Datennetzwerk auftretenden Lastspitzen,
Einrichtungen zum Zählen der Anzahl von erfassten Lastspitzen in einem Integrationsfenster, das eine erste Dauer aufweist, wobei das Integrationsfenster sich mit der Zeit bewegt,
Einrichtungen zur Bestimmung einer Übergangsphasensituation von Lastspitzen, wenn die Anzahl von erfassten Lastspitzen höher ist als eine erste Schwelle, und
**dadurch gekennzeichnet, dass** es enthält:
Schutzeinrichtungen des Datennetzwerks, die Einrichtungen zum Selbstglätten der Lastspitzen durch Anwenden einer unterschiedlichen Zeitverschiebung für jeden der mit dem Datennetzwerk verbundenen Rechner enthalten, die an der Übergangsphase von Lastspitzen beteiligt sind.

**Claims**

**1.** Method for smoothing the load peaks of a real-time data network, comprising the following steps:

the load peaks that appear in the data network are detected,
the number of load peaks over an integration window that has a first duration is counted, the integration window moving over time,
the data network is determined as being in a load peak transient phase situation if the number of detected load peaks is higher than a first threshold, then
**characterized in that** it comprises the following steps:
mechanisms for protecting the data network are triggered, said mechanisms comprising self-smoothing of the load peaks, during which process a separate time offset is applied to each of the computers connected to the data network that are involved in the load peak transient phase.

**2.** Method according to Claim 1, wherein isolated load peak detection is performed by carrying out the following steps:

the number of frames transmitted in a time-integration window of a second duration is counted, the average value of the frames is determined by multiplying the number of frames transmitted by the load rate of the data network,
a second threshold is defined, the value of said second threshold being between the average number of frames and the maximum number of frames of the data network, and
a load peak is determined as occurring if the number of frames is higher than the second threshold.

**3.** Method according to either one of the preceding claims, wherein the first duration is longer than the second duration.

**4.** Method according to one of Claims 1 to 3, wherein self-smoothing of the load peaks of the real-time data network comprising at least two computers is performed by carrying out the following steps:

for each of the computers that is involved in a load peak transient phase, a negative time offset is determined, this negative time offset is applied when all the frames of the computer are sent, the negative time offset being added to any pre-existing time offset.

5. Method according to Claim 4, wherein the value of the negative time offset of each computer is determined by random draw, the value being between zero and the value of the shortest frame transmission period of the computer.

6. System for smoothing the load peaks of a real-time data network, comprising:

means for detecting the load peaks that appear in the data network,
means for counting the number of load peaks detected over an integration window that has a first duration, the integration window moving over time, means for determining a load peak transient phase situation if the number of detected load peaks is higher than a first threshold, and
**characterized in that** it comprises:
means for protecting the data network comprising means for self-smoothing of the load peaks by applying a separate time offset to each of the computers connected to the data network that are involved in the load peak transient phase.

# FIG.1

# FIG.2

Tmax

t (ms)

Nb TramesFenêtre

P

t

EP 2 984 792 B1

# FIG.3

Tmax_phase

Nb TramesFenêtre

P

t

Nbpic_phase

T

t

EP 2 984 792 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1892631 A
- KR 20090010454
- US 2009003215 A